# EUROPEAN PATENT SPECIFICATION

(11) **EP 1 684 902 B1**
(45) Date of publication and mention of the grant of the patent: **09.01.2019**
(21) Application number: 04810919.3
(22) Date of filing: 12.11.2004
(51) Int. Cl.: B01J 47/08, B01D 61/48, C02F 1/469

(54) **WATER TREATMENT METHODS**
WASSERBEHANDLUNGSVERFAHREN
PROCEDES DE TRAITEMENT D'EAU

(30) Priority: 13.11.2003 US 712162; 13.11.2003 US 712674
(43) Date of publication of application: 02.08.2006
(73) Proprietor: Evoqua Water Technologies LLC, Pittsburgh, PA 15222 (US)
(72) Inventor: WILKINS, Frederick, Pepperell, MA 01463 (US); FREYDINA, Evgeniya, Acton, MA 01720 (US); SEZGI, Aytac, Bedford, NH 03110 (US); MADHUSUDAN, Reshma, Chicago, IL 60615 (US); JHA, Anil, D., Lincoln, MA 01773 (US)
(74) Representative: Murgitroyd & Company
(86) International application number: PCT/US2004/037940
(87) International publication number: WO 2005/049205

(56) References cited:
- EP-A- 0 170 895
- EP-A- 1 068 901
- EP-A- 1 075 868
- EP-A- 1 222 954
- WO-A1-98/17590
- US-A- 4 956 071
- US-B1- 6 296 751

## Description

### BACKGROUND OF THE INVENTION

### 1. Field of the Invention

The invention is directed to methods for treating water and, more specifically, for providing a high quality water for consumption and use.

### 2. Description of Related Art

Water that contains hardness species such as calcium and magnesium may be undesirable for some uses in industrial, commercial and household applications. The typical guidelines for a classification of water hardness are: zero to 60 milligrams per liter (mg/l) as calcium carbonate is classified as soft; 61 to 120 mg/l as moderately hard; 121 to 180 mg/l as hard; and more than 180 mg/l as very hard.

Hard water can be softened or purified by removing the hardness ion species. Examples of systems that remove such species include those that use ion exchange beds. In such systems, the hardness ions become ionically bound to oppositely charged ionic species that are mixed on the surface of the ion exchange resin. The ion exchange resin eventually becomes saturated with ionically bound hardness ion species and must be regenerated. Regeneration typically involves replacing the bound hardness species with more soluble ionic species, such as sodium chloride. The hardness species bound on the ion exchange resin are replaced by the sodium ions and the ion exchange resins are ready again for a subsequent water softening step.

Such systems have been disclosed. For example, Dosch, in U.S. Patent No. 3,148,687 teaches a washing machine including a water softening arrangement using ion exchange resins. Similarly, Gadini et al., in International Application Publication No. WO00/64325, disclose a household appliance using water with an improved device for reducing the water hardness. Gadini et al. teach of a household appliance having a control system, a water supply system from an external source and a softening system with an electrochemical cell.

Electrodeionization (EDI) is one process that may be used to soften water. EDI is a process that removes ionizable species from liquids using electrically active media and an electrical potential to influence ion transport. The electrically active media may function to alternately collect and discharge ionizable species, or to facilitate the transport of ions continuously by ionic or electronic substitution mechanisms. EDI devices can include media having permanent or temporary charge and can be operated to cause electrochemical reactions designed to achieve or enhance performance. These devices also include electrically active membranes such as semi-permeable ion exchange or bipolar membranes.

Continuous electrodeionization (CEDI) is a process wherein the primary sizing parameter is the transport through the media, not the ionic capacity of the media. A typical CEDI device includes alternating electroactive semi-permeable anion and cation exchange membranes. The spaces between the membranes are configured to create liquid flow compartments with inlets and outlets. A transverse DC electrical field is imposed by an external power source using electrodes at the bounds of the membranes and compartments. Often, electrolyte compartments are provided so that reaction product from the electrodes can be separated from the other flow compartments. Upon imposition of the electric field, ions in the liquid are attracted to their respective counter-electrodes. The adjoining compartments, bounded by the electroactive anion permeable membrane facing the anode and the electroactive cation membrane facing the cathode, typically become ionically depleted and the compartments, bounded by the electroactive cation permeable membrane facing the anode and the electroactive anion membrane facing the cathode, typically become ionically concentrated. The volume within the ion-depleting compartments and, in some embodiments, within the ion-concentrating compartments, also includes electrically active media. In CEDI devices, the media may include intimately mixed anion and cation exchange resins. The ion-exchange media typically enhances the transport of ions within the compartments and may participate as a substrate for controlled electrochemical reactions. Electrodeionization devices have been described by, for example, Giuffrida et al. in U.S. Patent Nos. 4,632,745, 4,925,541 and 5,211,823, by Ganzi in U.S. Patent Nos. 5,259,936 and 5,316,637, by Oren et al. in U.S. Patent No. 5,154,809 and by Kedem in U.S. Patent No. 5,240,579.

### SUMMARY OF THE INVENTION

In one aspect, the invention provides a method of providing water comprising passing a first water stream through a depleting compartment of an electrodeionization device to produce a second water stream having an LSI less than 0, passing the second water stream through a cathode compartment of the electrodeionization device to produce a third water stream, the third water stream being less corrosive than the first water stream and having an LSI of less than 0; and wherein the corrosivity of the second water stream is reduced by passing the water through the cathode compartment, wherein the third water stream is made less corrosive by reducing the concentration of oxidative species in the water stream; after exiting the cathode compartment the third water stream is directed to a point of use or a recirculation loop in communication with a storage tank; passing water first through a concentrating compartment and then through an anode compartment of the electrodeionization device.

In another aspect, the invention provides a method of providing potable water comprising: providing water to be treated from a storage loop including a storage tank;passing a first water stream of the water to be treated through a cathode compartment of an electrodeionization device to produce a second water stream; passing the second water stream through a depleting compartment of the electrodeionization device to produce a treated potable water having an LSI of less than 0, the treated potable water being less corrosive than the first water stream; and wherein the corrosivity of the first water stream is reduced by passing the water through the cathode compartment, wherein the treated potable water is made less corrosive by reducing the concentration of oxidative species in the water; after exiting the depleting compartment directing the treated potable water to a point of use or to the storage loop including the storage tank; passing water first through an anode compartment of the electrodeionization device and then through a concentrating compartment.

### BRIEF DESCRIPTION OF THE DRAWINGS

Preferred, non-limiting embodiments of the present invention will be described by way of example and with reference to the accompanying drawings, in which:
FIG. 1 is a schematic illustration of an electrochemical device or module in accordance with a first embodiment of the invention;
FIG. 2 is a schematic diagram of another electrochemical module in accordance with a second embodiment of the invention;
FIG. 3 is a schematic illustration of a system suitable for carrying out the methods according to the present invention;
FIG. 4 is a graph showing copper extracted from a copper coupon by three different water samples;
FIG. 5 is a graph showing copper extracted from a copper coupon after exposure to three different waters for various lengths of time;
FIG. 6 is a graph showing the amount of copper extracted from copper coupons after exposure to three different waters where the water is being changed out at various intervals;
FIG. 7 graphically illustrates product water conductivity and current applied in accordance with one or more embodiments of the invention; and
FIG. 8 graphically illustrates water conductivity out of a stack and out of a tank, as well as the current applied during operation in accordance with one or more embodiments of the invention.

### DETAILED DESCRIPTION OF THE INVENTION

The present invention provides methods for providing purified or treated water from a variety of source types. Possible water sources include well water, surface water, municipal water and rain water. The treated product may be for general use or for human consumption or other domestic uses, for example, bathing, laundering, and dishwashing.

Often, quality drinking water is associated with highly purified water. However, as long as the water is free of microbial contamination, the best drinking water may not necessarily be the most chemically pure. For example, water that has been purified to a high resistivity, for example, greater than about 1 megaOhm, may be so devoid of ionic content that it becomes "hungry" and corrosive to material such as copper, that may be used in water piping systems. Taste may also be affected by, for instance, the removal of bicarbonate species. Furthermore, beneficial or desirable chemicals that have been added to the water, for example, fluoride and chlorine species, may be removed along with undesirable species, resulting in a water that may need to be re-fortified.

If a household is supplied with hard water, i.e., water containing greater than about 60 ppm calcium carbonate, it is often treated prior to use by being passed through a water softener. Typically, the water softener is of the rechargeable ion exchange type and is charged with cation resin in the sodium form and anion resin in the chloride form. As water passes through the resin bed, major contributors to hardness, such as calcium and magnesium species, are exchanged for sodium. In this manner, the water can be softened as the concentration of divalent cations and, in particular, calcium and magnesium ions, decreases. However, an equivalent of sodium is added to the treated water for every equivalent of calcium that is removed. Thus, although the water is softened, the hardness is replaced with sodium ions that some consumers may find undesirable. Furthermore, when these ion exchange beds are recharged by rinsing with sodium chloride solution, the resulting brine must be disposed of and is often discharged to a septic system where the brine becomes available to re-enter the ground water. In some jurisdictions, discharge of brine to a domestic septic system is regulated or prohibited.

Other methods of softening water include the use of reverse osmosis devices that can supply high purity water, but generally do so at a slow rate and require the use of a high pressure pump. Furthermore, many reverse osmosis membranes can be fouled by the presence of dissolved materials such as silica, which may often be found in well water.

Although the examples described herein use electrodeionization devices, other water treatment techniques, such as capacitive deionization, may be just as applicable.

Continuous electrodeionization can also be used to remove hardness components from a water supply. However, most CEDI systems have power, space and service requirements that make them impractical for domestic use. In addition, because chlorine may be undesirable in the presence of ion exchange resins, if a chlorinated water supply is to be softened, the chlorine often should first be removed from the water. This means that any water treated in this manner does not benefit from the residual bactericidal properties of the chlorinated water supply.

Frequently, CEDI systems are designed to remove as many ions as possible, and easily ionizable species such as calcium and sodium are efficiently removed so that less than 1% of the cations present in the feed water remains in the treated water. For many industrial and commercial uses, this highly purified water may be beneficial, however, this level of purity may be undesirable for a household water supply in which some level of cation content may be beneficial. Furthermore, this highly purified water may be corrosive and may be prone to attack copper pipes that are often present in domestic water distribution systems. Some domestic water distribution systems may include lead soldered joints, and heavy metals, such as lead, may also leach into water passing through the pipes.

In some jurisdictions, minimum levels of calcium may be necessary in order to comply with health and safety regulations. Thus, a high purity system that removes greater than, for example, 90 or 99% of the calcium from the water supply may be inappropriate in these locations.

The present invention in accordance with one or more embodiments, can utilize CEDI technology to produce purified or treated water with properties that may be ideal water for domestic consumption. For example, the apparatus can soften a hard or very hard water supply, yet retain some level of calcium, at a level below about 60 ppm calcium carbonate. In addition, chlorine can be retained in the water so that if the water, after treatment, is stored for any length of time, it retains at least some of its bactericidal qualities. Bicarbonate species may also be retained at levels that provide better tasting water. Fluoride may also be retained so that additional fluoride supplements may be unnecessary. In addition, compounds such as silica, boron and other less ionizable species may also be retained at desirable levels greater than other CEDI methods. By retaining some of these trace materials, such as boron and silica, the properties of the treated water may be improved over water which has had a greater amount of these materials removed. In some embodiments of the present invention, at least 80 or 90% of these compounds can be retained while more than 25%, 30% or 50% of hardness contributing compounds, such as calcium, are removed.

In addition, the invention provides for the addition of hydrogen (H₂) to the water, which may contribute to reducing the corrosivity of the treated water. The addition of hydrogen to the water may manifest itself by a detectable increase in dissolved hydrogen or a resulting decrease in the concentration of oxidative species. This may provide for desirable anti-oxidant properties as well. The pH, if altered at all, is generally close to that of the supply water and thus will not have deleterious effects on equipment or systems that are designed to use un-softened tap water at approximately neutral pH.

An apparatus suitable for carrying out the invention, while having a relatively small foot print and using less energy than many CEDI, or other, treatment systems, still can supply quantities of treated or softened water that satisfy peak domestic demand situations. It may be able to supply softened water continuously, as no recharging cycle is required and a reserve of treated water may be formed.

Furthermore, the methods of the present invention may provide treated water without increasing the ionic load discharged from the treatment system. Conventional chemical treatment systems may require recharging with, for example, sodium chloride, that in turn is substituted for hardness species that are removed from the water. This means that both the hardness species and the substituted species are present in either the softened water or in discharged brine. This may add to the ionic load of waste water discharged from the home and may result in, for example, harm to ground water. Some embodiments of the present invention, however, may discharge only that ionic material that enters the home via the feed water. Furthermore, the total amount of waste water discharged as a result of the softening process may be significantly less than that with conventionally softened waters, for example, less than 10% or 5% of the volume of water treated.

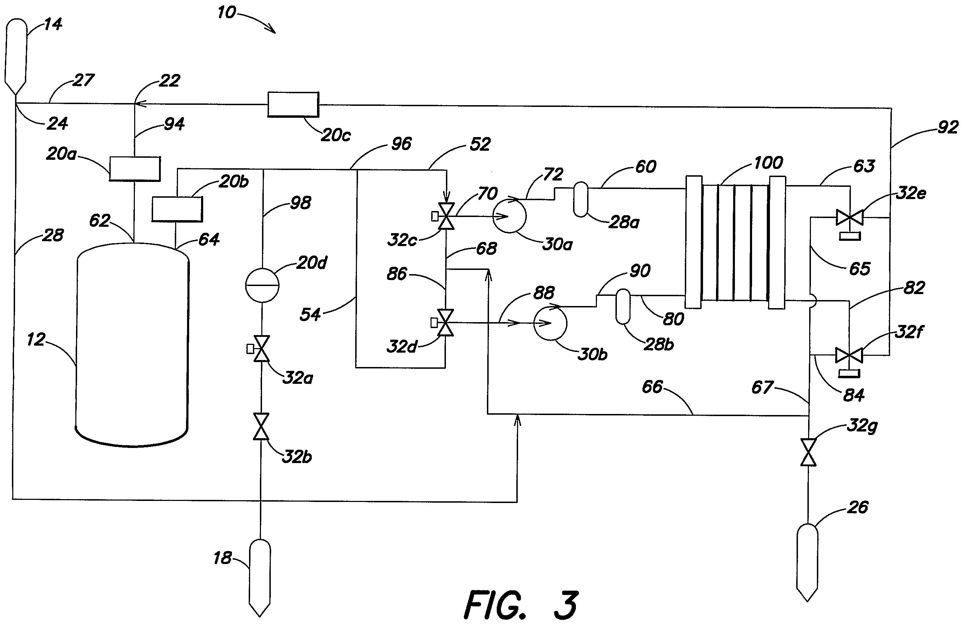

A system suitable for carrying out the methods according to the invention is illustrated schematically in FIG. 3. FIG. 3 shows a water softening system 10 that may be used in a variety of installations, such as in a home. Feed water is supplied at point of entry 14, that may be, for example, well water or a municipal water supply.

At tee 24 water can enter either or both of conduits 26 and 28. Water passing through conduit 26 is typically directed to conduit 94 at tee 22 and feeds storage vessel 12 after passing by pressure indicator 20a and through inlet 62. When demand for water exists downstream of the storage device, water exits through outlet 64, passes by pressure sensor 20b and enters either conduit 96, conduit 98 or both depending on the demand source. Conduit 98 leads past pressure sensor 20d and valves 32a and 32b to service point 18. Service point 18 may be fluidly connected to a plumbing system or may be selectively joined to a specific point of use, such as appliance or bath.

Water that passes through conduit 96 may enter either conduit 52 or conduit 54, or both. In one configuration, water entering conduit 52 is directed by valve 32c to conduit 70 and pump 30a. After passing through conduit 72 and optional pretreatment device 28a which may be, for example, a carbon filter, particulate filter, or aeration device, the water is directed to conduit 60 at which point it enters electrodeionization module 100. Water entering via conduit 60 is purified by passing through one or more ion-depleting (depleting) compartments and may also pass through an electrode compartment, for example, the cathode compartment.

By plumbing the depleting compartments (where treated, product water is produced) either upstream or downstream of the cathode compartment, the system can be grounded via the cathode. This may be particularly advantageous in a household setting, as it may reduce safety hazards for the consumer. Furthermore, hydrogen gas that may be formed at the cathode can be dissolved into the product water passing through, resulting in a product water that may be less corrosive than had the water bypassed the cathode compartment. Product water may feed (or receive water from) the cathode, the anode, or both. If the product water communicates with both electrodes, the system may be plumbed so that the depleting compartments are in series or parallel with the electrode compartments. After exiting electrodeionization module 100 via conduit 63 the purified water may be directed by valve 32e to conduit 92 and pressure reading device 20c. The water then proceeds to tee 22 and is directed to conduit 94 prior to entering storage vessel 12. Thus, storage vessel 12 may include purified water from conduit 92 as well as untreated, or minimally treated, water that is provided from point of entry 14. Storage vessel 12 may be configured so that these two water sources are mixed, or alternatively, that the two water sources are segregated, for example, one of the water sources may enter the bottom of storage vessel 12 and proceed in plug-flow manner upwardly to outlet 64. Performance of electrodeionization module 100 may be improved by pretreatment that includes the removal of chlorine, a municipally treated water supply may be passed through a chlorine reducing filter such as carbon filter 28a or another pre-treatment device prior to entry into electrodeionization module 100.

Pre-treatment devices may also be placed elsewhere in the loop. Water that enters storage vessel 12 after being treated in electrodeionization module 100 may contain little or no chlorine (or alternative disinfectant) and to retain a residual chlorine level in storage tank 12 the water can be mixed with untreated water from point of entry 14. Preferably, the chlorinated water is added at a rate adequate to result in a mixed water that contains enough chlorine to inhibit bacteriologic activity. Active chlorine refers to those chlorine containing species that exhibit anti-microbial activity. An effective chlorine concentration is defined herein as a concentration of active chlorine compounds, for example, sodium hypochlorite, that inhibits the growth of bacteria, such as e-Coli, in storage vessel 12. Therefore, the ratio at which the feed water and treated water are mixed in storage vessel 12 may be dependent upon a number of factors including the efficiency of electrodeionization device 100, a desired effective chlorine concentration, the rate at which water contained in storage vessel 12 will be depleted, the temperature of storage vessel 12 and the source and quality of the feed water. Of course, if well water or another source of untreated water is used, maintenance of an effective disinfectant level may be disregarded.

While water is being recycled through the purification loop, additional water may be supplied via conduit 54 to valve 32d where it is directed to conduit 88, pump 30b, conduit 90, pretreatment unit 28b and conduit 80 prior to entering electrodeionization module 100. From conduit 80, water may feed one or more ion-concentrating (concentrating) compartments which may also be plumbed in series with the anode compartment. The anode compartment may lie either upstream or downstream of the concentrating compartment. By passing through the anode compartment, the pH of the water can be lowered and may result in water having a lower LSI. The lower LSI, which may be reduced to less than 0 (non-scaling), decreases the scaling potential of the water and thus provides for a lower maintenance, higher water recovery, increased longevity and more reliable system. Concentrate exiting electrodeionization module 100 typically enters conduit 82 and can be directed by valve 32f to conduits 84 and 67 where a portion of the concentrate may be discharged to waste either constantly or intermittently via valve 32g and drain 26. An additional portion of the water may enter conduit 66 and can be recycled to the electrodeionization module 100 via conduit 86 and valve 32d. In this manner, a concentrate solution may accept ions until a specific level is reached, for example, a pre-chosen LSI, so that a minimal amount of water can be discharged while maintaining a non-scaling environment throughout the loop. Water conservation can be improved further by using the concentrate for applications such as irrigation, that do not require softened water.

If a polarity reversal system or technique is used, the previously described loops can be switched so that the purification loop operates as the concentrating loop and the concentrating loop operates as the purification loop. In accordance with one or more embodiments of the invention, when the polarity of the anode and cathode are switched, the function of the concentrating and depleting compartments are also switched and pump 30a, pre-treatment device 28a, conduit 60 and conduit 63, as well as valve 32e each become part of the concentrating loop. Likewise, pump 30b, pre-treatment device 28b, conduits 80 and 82 and valve 32f become part of the purified loop supplying water to storage vessel 12. Thus, not only are the electrodeionization module compartments switched but all of the associated parts such as pre-treatment devices, pumps, valves, gauges and tees possibly excepting valve 32g are alternated between carrying purified water and concentrate water, resulting in decreased opportunity for prolonged scaling and increased opportunity for the dissolution of any scale that may have formed. This has proved particularly advantageous in reducing scaling in components such as valves, orifices, filters or tees. Reverse polarity cycles may be based on a number of factors, including time, source water quality, temperature, purified water quality, desired water quality and water use rates.

In addition to providing for effective levels of chlorine in storage tank 12, the system can be operated to maintain levels of other components such as bicarbonate, fluoride, silica and boron. The electrodeionization module 100 may contain ion exchange material and may be operated at a current and flow rate designed to minimize the removal of some or all of those species. In addition, some of the calcium, magnesium, iron, manganese or other hardness components present in the water may be retained to provide a purified water containing, for example, about 200, 300, 400 or 500 ppm hardness. This may result in a water that is less corrosive, and exhibits better aesthetic qualities than does water which has been reduced to a lower level of hardness. By removing, for example, about 20, 30, 40, 50 or 60% of the divalent cations in a single pass through the electrodeionization device, the device may require less power and a smaller foot print than would a device designed to more completely remove divalent cations from the water in a single pass.

Systems and techniques suitable for carrying out the present invention can comprise a post treatment system of subsystem capable of destroying or rendering inactive any bacteria that may be delivered to a point of use. For example, the post treatment system can comprise an apparatus or device that can irradiate treated or purified water with actinic radiation or expose with ozone or remove any bacteria by ultrafiltration and/or microfiltration.

LSI refers to Langelier Saturation Index. LSI may not indicate how much scaling may occur, but may provide information whether a water will deposit scale (LSI > 0), dissolve calcium deposits (LSI < 0) or be an equilibrium (LSI = 0) with calcium deposits. Typically, LSI is equal to the pH change that would be required in order to bring a water to equilibrium conditions. For example, a water exhibiting an LSI of about 1.0 could be brought to equilibrium by reducing the pH of the water by 1.0 pH unit. Calculating LSI may be performed in accordance with ASTM D-3739.

In accordance with the present invention, a method is provided that reduces any pH increase while also reducing water usage. Water can be passed through the cathode compartment, as well as through one or more ion depletion compartments, and water that might normally be dedicated to the cathode compartment alone can function as both product water and as electrolyte for the cathode compartment. Water may first be fed to one or more, or all of the ion-depleting compartments and then to the cathode compartment, prior to its use as product water. Alternatively, the feedwater may first be passed through the cathode compartment, then through one or more ion-depletion compartments and then to a point of use. In this manner, all, or a portion, of the water that passes through the cathode compartment can be used as product water, resulting in water savings. Such an arrangement, wherein the cathode compartment may be fluidly connected to one or more ion-depleting compartments, also can provide for effective grounding of the water system through the cathode, thus resulting in higher levels of safety and serviceability, that may be preferred in particular installations such as, for example, domestic water systems.

Water may be supplied to the cathode compartment at a rate that results in an increase in pH of less than about 2 pH units from the time of entry to the time of exit from the cathode compartment. In other embodiments, the pH increase may be limited to about 1, 0.5, 0.2, 0.1 or lesser pH units. Any technique for reducing the pH increase may be employed. One way of controlling the pH increase in the catholyte is by increasing the fluid flow through the cathode compartment. In comparing the flow of water through a cathode compartment to the flow through one of the depletion compartments in the module, a flow ratio of about 1:2, 1:5, 1:10, 1:50 or greater may provide water exhibiting a preferable LSI. For example, if the flow through one ion-depleting compartment is about 40 liters per hour, the flow through the cathode compartment may be about 400 liters per hour, providing a ratio of about 1:10 between the flow through an ion-depleting compartment and the flow through the cathode compartment. If the water passing through all of the ion-depleting compartments in a module is directed through the cathode compartment as well, the ratio of flow between the cathode compartment and an individual ion depleting compartment (assuming equal flow through each compartment) will be equal to the number of ion-depleting compartments in the module. For instance, in a module that contains 25 ion-depleting compartments, if all of the water passing through the ion-depletion compartments also passes through the cathode compartment, the ratio of the flow of water passing through any one of the ion-depleting compartments in relation to the cathode compartment would be about 1:25, if the flow through each of the ion-depleting compartments is the same.

Using product water as catholyte may appear to be counterintuitive for several reasons, including, for example, the higher resistivity of product water in a cathode compartment that typically performs better with low resistivity water. However, product water may be of low enough resistivity, e.g., less than about 1 megaOhm, such that the conductivity through the cathode compartment is not altered to an extent where module performance is significantly degraded. Furthermore, the addition of dissolved hydrogen gas into the product water as it passes through the cathode compartment may provide for a water of lower corrosivity without a concurrent increase in LSI. This water may also provide health benefits as a result of, for example, anti-oxidant activity. Water produced using this may also be less corrosive to copper or copper-containing components than either raw tap water or a water softened by conventional means.

The rate of flow through the cathode compartment may be set or adjusted to be adequate to minimize scale formation. Preferably, the rate of flow through the cathode compartment is greater than about 5 liters per minute of water per amp of current passing through the module. More preferably, the rate of flow through the cathode compartment is greater than or equal to about 12 liters per minute of water per amp applied through the module. As the rise in pH that typically occurs in the cathode compartment may be a function of, among other factors, the current passing through the compartment, the pH increase can also be mitigated by increasing the rate of flow through the compartment in response to an increase in current.

Conventional CEDI modules often suffer from scaling in the ion-concentrating compartments. This may be due to an increase in LSI that may be the result of an increase in calcium concentration in water therein.

In accordance with the present invention scaling in the ion-concentrating compartments can be reduced by lowering the LSI of water passing through the concentration compartments. One method of achieving this reduction is by using at least a portion of the stream concentrate as anolyte. In this manner, the increase in LSI resulting from a higher concentration of calcium and other dissolved ionic constituents can be countered by lowering the pH component of the LSI. This can be done by passing concentrate through the anode compartment. For example, water may first pass through one or more of the concentrating compartments in a CEDI module and may then be directed through the anode compartment, as anolyte. The water may then be discharged to waste or may be recycled through the system to build up a greater concentration of dissolved species and thus reduce or conserve the amount of water that must be discharged. Thus, a "loop" including at least one concentrating compartment and at least one anode compartment may be employed. A portion of the water may be constantly or intermittently bled or discharged from such a concentrating compartment/anode compartment loop to prevent the buildup of calcium or other ionic constituents to levels that might result in scaling. Alternatively, instead of passing to waste, this ion-fortified water may be used in applications that do not require treated water, for example, irrigation, and other conventional gray water uses.

The water may pass either through the anode compartment first or through one or more ion-concentrating compartments first. For example, if a minimum pH water is desired, then the fluid residence time in the anode compartment may be increased by, for example, fluidly communicating with few or only one ion-concentrating compartment. Alternatively, if all of the ion-concentrating compartments are in communication with the anode compartment, then each of these fluid streams should contribute fluid, and the flow through the anode compartment will be greater, resulting in a smaller pH decrease.

The water may first be passed through the anode compartment and then through one or more ion-concentrating compartments or, alternatively, the water may first be passed through one or more ion-concentration compartments and then through the anode compartment. To prevent scaling in the ion-concentrating compartments it may be preferred to first feed the fluid stream to the anode compartment and then to the ion-concentration compartment or compartments. In this manner, the pH of the feed may be lowered (as is the LSI) prior to being introduced to the ion-concentrating compartment. When the water passing through the anode compartment and the ion-concentrating compartments is part of a recirculation loop, it may be less important to pass the water through the anode compartment first, because the fluid in the recirculation loop (a portion of which will typically have already passed through the anode compartment) can consistently provide water of decreased pH to one or all of the ion-concentration compartments, regardless of the order in which fresh feed is introduced to the two compartments.

According to the present invention, at least one of the ion-depleting compartments of the module is in communication with the cathode compartment and at least one of the ion-concentrating compartments of the module is in fluid communication with the anode compartment. The anode/concentrating compartment configuration may be similar or identical to the cathode/depleting compartment configuration, so that when the applied electrical polarity of the module is switched, the two fluid streams may correspondingly swap functions as well, soon after the polarity reversal is completed. This can provide a polarity reversal system that decreases the number of valves required compared to many CEDI polarity reversal systems. Thus, while the need for polarity reversal may be diminished because of the reduction in LSI due to other design changes, if polarity reversal is desired, the function of the loops can be switched to accommodate the polarity change.

By constructing each of the two loops so that it may alternatively act as concentrating/anode loop and depleting/cathode loop, the entire loop, and its associated components, need not be continuously exposed to the higher LSI fluid. That is, each loop may be configured and have components that provide a degree of functional symmetry that allows each loop to perform alternating concentrating and depleting roles.

A water treatment system suitable for carrying out the present invention, preferably a CEDI based system such as that illustrated in FIG. 3, is provided to a point of use so that treated water may be produced for domestic consumption on a continuous basis without regeneration. A supply of treated water may be interrupted when a conventional water treatment device, such as a rechargeable softener, requires regeneration. The present invention, however, may allow for an uninterrupted supply of softened water. Additionally, the system may be installed and serviced by technicians trained in the installation and maintenance of traditional water treatment systems.

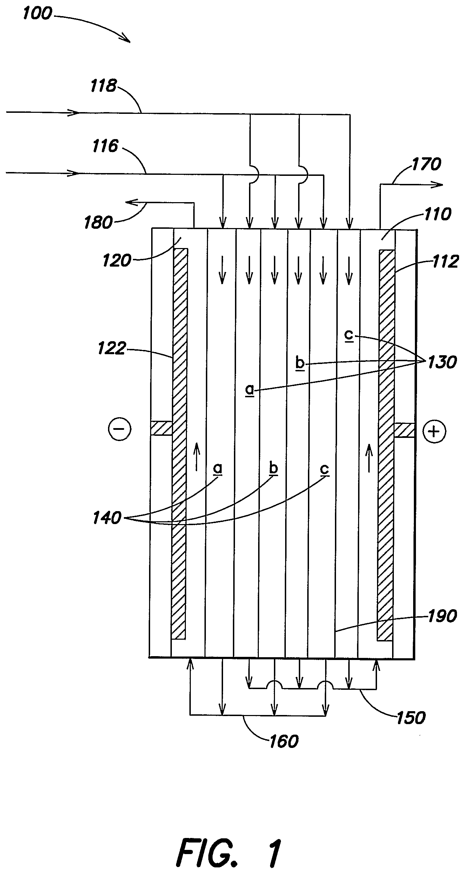

FIG. 1 illustrates one embodiment of the invention. Module 100 is shown in cross section illustrating a group of parallel and alternating ion-depleting and ion-concentrating compartments as well as associated cathode and anode compartments at opposing ends of the module. Water from a domestic source, for example, well water or municipal water that may or may not have been treated by passing through a particle and/or carbon filter, is fed to the system by one or more conduits such as conduit 116. From conduit 116, water is fed through ion-depleting compartments 140a, 140b, and 140c. Water is fed from conduit 118 to ion-concentrating compartments 130a, 130b, and 130c. Both the depleting and concentrating compartments are typically filled with an electroactive material or ion exchange material such as ion exchange resin (which may be bound or unbound) or fibers, and each of the compartments is bounded by an anion permeable membrane and a cation permeable membrane, although in other embodiments a compartment may be bounded by two of a similar type membrane. After passing through ion-depleting compartments 140a, 140b, and 140c, a portion, for example, 30%, of the TDS in the water, and in particular, a portion of the hardness ions such as calcium and magnesium typically passes from the ion-depleting compartments through the adjacent ion permeable membranes into an adjoining ion-concentrating compartment. Water then passes through the bottom of each of the ion-depleting compartments into conduit 160 which in turn feeds cathode compartment 120 containing cathode 122. Cathode compartment 120 may or may not contain ion exchange material, and as the water passes through the compartment while current passes through the module, the pH of the water is typically increased and hydrogen gas is typically dissolved into the water in part per million quantities. After exiting the cathode compartment via conduit 180, the water may join a recirculation loop in communication with a storage tank, or may directly feed a point of use.

Water entering the module via conduit 118 passes through concentration compartments 130a, 130b, and 130c that are bounded by an ion semipermeable membrane such as an anion permeable membrane or a cation permeable membrane. The ion-concentrating compartments may be filled with electroactive media or ion exchange material such as ion exchange resins or fibers. After passing through the ion-concentrating compartments, the water is fortified with ionic materials that have been received from adjoining ion-depleting compartments. This water, now containing a greater level of TDS than when it entered the compartments, exits the compartments via conduit 150 and enters anode compartment 110, containing anode 112, and which may or may not be filled with ion exchange material. As the water passes through anode compartment 110, the pH of the water may be lowered, thus reducing the LSI of the concentrated fluid. The water then exits via conduit 170 where all, or a portion, of the water may be bled to waste or intermittently discharged to waste. The water may also enter a loop which is recycled to feed concentrating compartments 130a, 130b, and 130c continuously. In this manner, water maybe conserved while bleeding off enough high concentrate so that calcium, magnesium, and other ionic species do not build up to such a level as to reduce efficiency, such as by scaling or clogging sections of the module or its associated components of piping, filters, and valves. In this manner, calcium and other hardness contributing species can be removed from the water while minimizing the amount of concentrate that must be removed from the system. For example, less than about 15, 10 or even 5% of the volume of water treated may be discharged to waste. Furthermore, the concentrate that is removed from the system can be useful in non-softened applications, such as for irrigation or other uses that may not be adversely affected by hardness levels. The addition of high levels of calcium to raise or buffer pH may benefit some applications, that are pH sensitive, such as lawn maintenance.

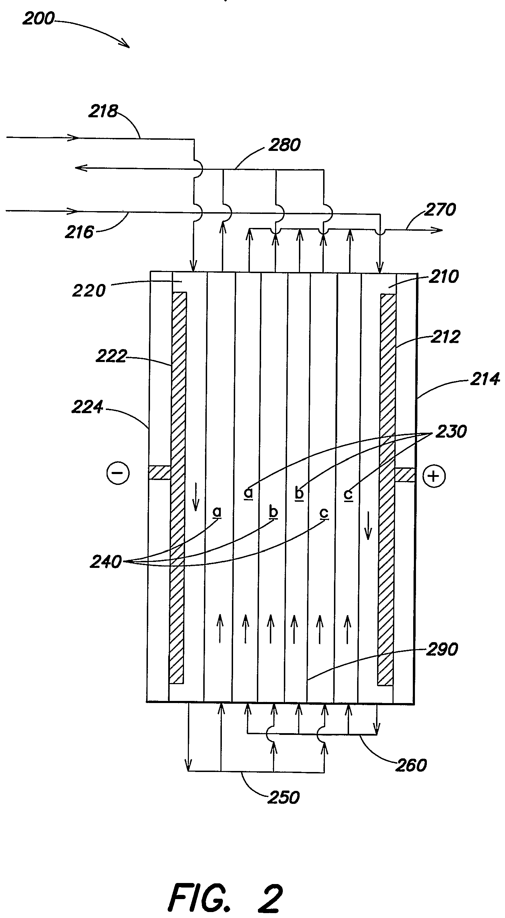

An alternative embodiment is illustrated in FIG. 2 depicting module 200 in cross section. Water enters the module from a raw, treated or filtered water supply that may be part of a storage loop, including a storage tank, through either conduit 218 that feeds the cathode compartment or conduit 216 that feeds anode compartment 210. Cathode compartment 220 includes cathode plate 222 while anode compartment 210 includes anode plate 212. The spacers and electrodes in the system may be held together by connectors that pass through end blocks 214 and 224. Water passing through anode compartment 210 exits the compartment via conduit 260 at a pH that is lower than when it enters the compartment. The pH of this water may be controlled by several factors including the flow rate of the water through the compartment as well as by the magnitude of the electric current passing through the module. For example, the greater the current and the lower the flow rate, the greater may be the decrease in pH. From conduit 260, the water passes through concentration compartments 230a, 230b, and 230c. These compartments may contain ion exchange material such as ion exchange resin or fibers and may be bounded by semipermeable membranes 290 that may be permeable to anions, cations, or both. As water passes through compartments 230a, 230b, and 230c it typically increases in ionic concentration due to a transfer of ionic materials from the adjoining ion-depleting compartments 240a, 240b, and 240c. After exiting the ion-concentrating compartments, the water is directed to conduit 270 and a portion, or all, of the water may be directed to waste either constantly or intermittently. Conduit 270 may also be part of a recycle loop that serves to feed water back into conduit 216 and anode compartment 210 so that the water may be further concentrated before it is discharged to waste. Any water volume that is lost to waste can be made up by the addition of feed water from inlet 216.

Water that enters through conduit 218 can be directed to cathode compartment 220 that contains cathode 222. Water passes from the top of the cathode compartment to the bottom of the cathode compartment and exits the compartment at a pH that is higher than when it entered. It can also exit with a greater concentration of dissolved hydrogen than when it entered the cathode compartment. After exiting the cathode compartment and entering conduit 250, the water can be directed to ion-depleting compartments 240a, 240b, and 240c. These compartments may contain ion exchange material, for example, ion exchange resins or fibers. The ion exchange material contained in the depletion compartments may be anionic exchange material, cation exchange material, mixed ion exchange material or alternating layers of anion exchange material, cation exchange and/or mixed ion exchange material. Preferably, the ion-depleting compartments contain mixed ion exchange resin as do the adjacent concentrating compartments, allowing the compartments to change function upon reverse polarization. After passing through the ion depleting compartments, the water exits in a more purified state than when it entered, for instance, containing less than about 20, 40, 60, or 80% of the original ion concentration (and particularly, of the hardness ion concentration). Water can then be directed to conduit 280 where it can be sent to a point of use, or into a loop and storage system where it can be mixed with additional source water and recycled through the module one or more times. In this manner, by removing relatively small percentages of the ionic species contained in the water, for example about 10, 20, or 40%, the water may be significantly more purified after several passes through the system at the same removal efficiency. For example, depending on the rate at which the treated water is diluted with source water (which is dependent on the rate of use), a module that reduces the concentration of hardness ion species in the water by about 40% at each pass may result in a purified water that contains only 20% of the hardness of the source water itself. In this way, treated water can be provided by a relatively small module operating at low flow and low current conditions. For example, on a concentration basis, a feed water having a hardness concentration of up to about 1800 ppm, or greater, can be reduced to about 600 ppm, or less, by implementing a recycle loop system.

The module may also be operated in reverse polarity mode. Soon after the polarity of the two electrodes is reversed, the loop, including the anode and concentration compartments, can switch functions with the loop that includes the cathode and dilution compartment. In this manner, compartment 220 becomes the anode compartment and compartment 210 becomes the cathode compartment. Likewise, compartments 240a, 240b, and 240c can become ion-concentrating compartments and 230a, 230b, and 230c can become ion-depleting dilution compartments. By associating an electrode compartment to a series of ion exchange compartments, the number of valves required to be activated upon polarity reversal can be reduced. For example, in the module exemplarily illustrated in FIG. 2, the functions of conduit 270 and conduit 280 can change by simply switching two valves. This is in contrast to systems that may contain a greater number of independently valved components. For example, if the anode compartment, cathode compartment, ion-depleting compartments and ion-concentrating compartments are plumbed separately, then additional valves may be required to correspondingly change the function of each of these compartments upon reversing the polarity of the electrodes. This additional valving can lead to increased cost and maintenance requirements.

It is also possible to use systems and methods for disinfecting any wetted component of the treatment system by, for example, delivering or exposing at least a portion of the wetted component to a disinfectant such as halogen, a halogen donor, and/or a oxidizing compound such peroxygen compounds.

### Example

As water treated with a CEDI system may contain reduced levels of TDS, pH and LSI when compared to untreated water, CEDI treated water was tested to determine how corrosive the product water might be. These results may be of particular importance when the CEDI treated water is to be used in a system including copper plumbing, such as many residential water systems. Specifically, water treated according to one embodiment of the invention was tested for copper corrosivity side-by-side with untreated water, CEDI treated water, and water treated by a conventional softening system. The corrosion, or leach, test was performed on 2.54 cm (1") diameter x 5.08 cm (2") long copper pipes as coupons. The samples included CEDI treated water (2 configurations) as the challenge water with untreated water and softened water as two controls.

The untreated water (HARD) was well-water from Northbrook, Illinois having a TDS level of about 490 ppm, a hardness of about 18 gpg and a pH of about 7.8. The LSI of the untreated water ranged from 0.8 to 1.0. Conventionally softened water (SOFT) was obtained by treating the well-water with a 22.9 cm (9") softener containing 28,3 l (1 cu.ft.) of standard CULLEX® resin available from Culligan Corporation, Northbrook, Illinois. CEDI water was produced in trial 1 with a system that did not include an inline reservoir. In trial 2, CEDI treated water (PRODUCT) was obtained at the tank outlet of the inline reservoir of the CEDI system illustrated in FIG. 3. Thus, trial 2 included passing CEDI product water through the depleting compartments and then through the cathode compartment of the CEDI module.

The test coupons were prepared by cutting a 2.54 cm (1") dia copper pipe into 5.08 cm (2") long pieces and trimming them to remove all burrs. The coupons were rinsed in acetone followed by RO water to remove any grease and metal shavings from the cutting operation. The coupons were each cleaned in 150 mls of 2N HCl solution for 1 minute and sequestered in a neutralizing solution. They were then stored in a dessicator overnight after being rinsed again in RO water and wiped clean. A total of 12 coupons were prepared for trial 2.

Each category of water was set aside into five 500-ml beakers. Each of the samples of water were sampled periodically and in similar patterns. The samples were tested as follows:

### TRIAL 1 -

The first trial included fewer samples than Trial 2 and corrosion analysis was performed under stagnant conditions. The product water samples were taken from the system and analyzed at day 1, day 4 and day 12. Water was treated in a low flow CEDI system without an inline reservoir. The water was passed once through the depleting compartments (not through the cathode) under the following conditions:
- 25 cell pairs - low flow small stack with continuous duty, once through operation
- Compartment size: 19.05 cm x 3.05 cm (7.5" x 1.2") wide
- Resin filling: 60% IRA-458 Anion Resin, 40% SF-120 Cation Resin
- Concentrate re-circulation and product discharge flow rate: ∼ 1 l/min
- Waste/reject continuous discharge flow rate: ∼500 ml/min
- Electrode continuous flow rate: ∼300 ml/min per electrode. Fresh feed water sent to electrode compartments
- Applied voltage = 36 V, or 1.45V/cell
- Feed Conductivity = 740 µS
- Product obtained from a once through operation

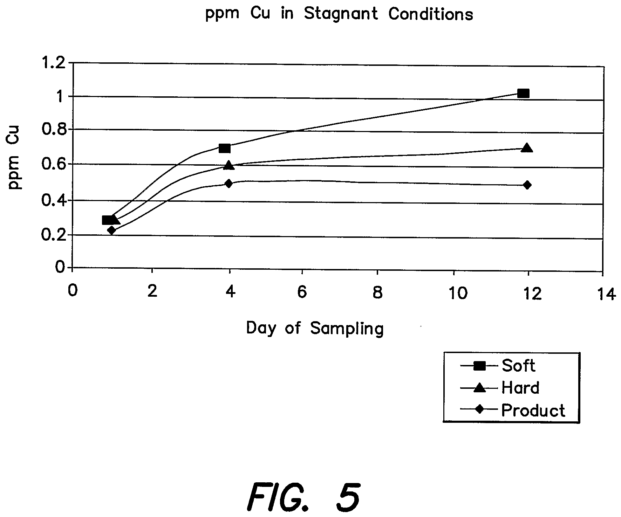

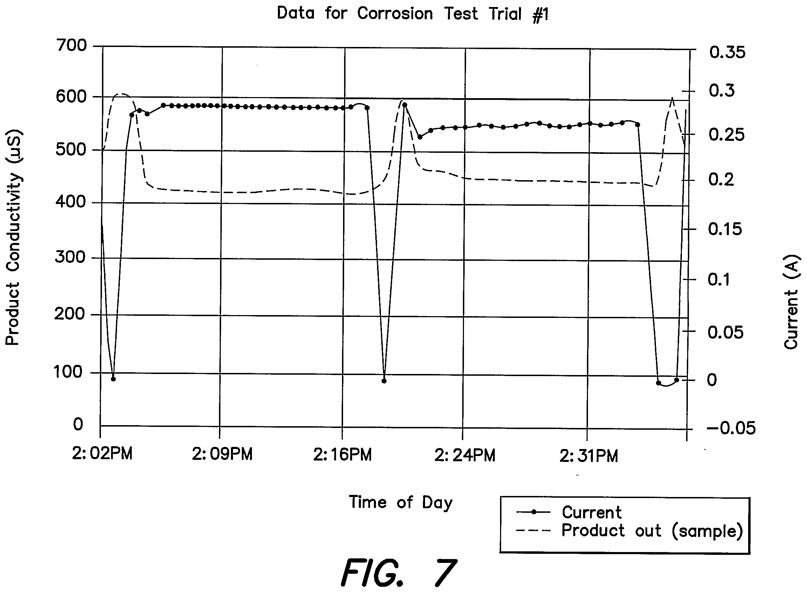

Corrosion results from Trial 1 are reported in FIGS. 5 and 7 and provide a comparison of raw water, conventionally softened water and the water produced by the CEDI system, as described above.

### TRIAL 2 -

A- Stagnant water was used as a control (control) without any coupons. Samples of stagnant water not containing a coupon were analyzed on the 1^{st}, 5^{th} and 12^{th} day, as were samples C, D and E (see below).
B- Each of the three waters (changing) was placed in a separate beaker and the water was changed periodically to allow the coupon immersed to come into contact with fresh water. This was done to observe the effect of fresh water on leaching. The exchanged water was analyzed each time the water was changed. The water in these samples was changed on the 1^{st}, 5^{th}, 9^{th} and the 12^{th} day.
C- A coupon was immersed in each of the three waters (stagnant) for exactly one day. The water was sent for analysis after one day.
D- A coupon was immersed in each of the three waters (stagnant) for 5 days. The water was sent for analyses after five days of stagnation.
E- A coupon was immersed in each of the three waters (stagnant) for 12 days. The water was sent for analyses after 12 days of stagnation.

Trial 2 was performed with a CEDI system using an inline reservoir and product-through-cathode technology under the following conditions:
- 25 cell pairs - product through cathode stack with inline reservoir/tank system
- Compartment size: 19.05 cm x 3.05 cm (7.5" x 1.2") wide
- Resin filling: 60% IRA-458 Anion Resin, 40% SF-120 Cation Resin
- Concentrate re-circulation and product re-circulation flow rate: ∼ 1.4 l/min
- Waste/reject flush (flushed periodically) flow rate: ∼200 ml/min
- Product water through cathode, concentrate re-circ. flow through anode
- Applied voltage = 51V, or 2.04 V/cell
- Feed Conductivity = 740 µS
- Sample of product water collected from tank at set point of about 220 microsiemens.

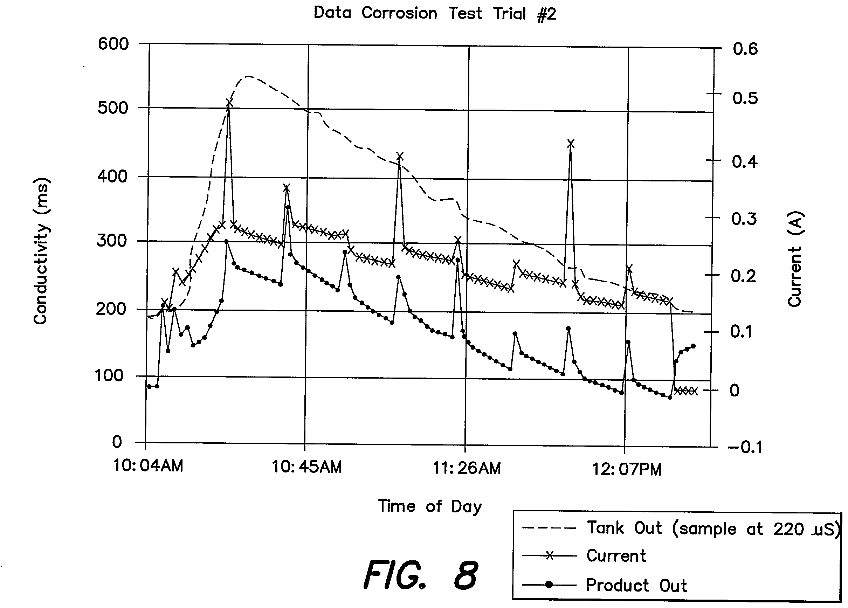

Data from Trial 2 are presented below in FIG. 8. A comparison of the copper concentration, pH, LSI and alkalinity of the water treated by the CEDI system (PRODUCT), conventionally treated soft water (SOFT) and untreated hard water (HARD) is provided in Tables 1-4 below.

**Table 1: Cu Concentration in ppm**

| | PRODUCT | | | SOFT | | | HARD | | |
|---|---|---|---|---|---|---|---|---|---|
| Day | Control | Stagnant | Changing | Control | Stagnant | Changing | Control | Stagnant | Changing |
| 0 | 0 | | | 0 | | | 0.004 | | |
| 1 | 0 | 0.17 | 0.142 | 0 | 0.289 | 0.318 | 0.005 | 0.309 | 0.273 |
| 5 | 0 | 0.538 | 0.493 | 0 | 0.685 | 0.752 | 0.006 | 0.764 | 0.741 |
| 9 | | | 0.418 | | | 0.703 | | | 0.922 |
| 12 | 0 | 0.529 | 0.489 | 0 | 0.843 | 0.725 | 0 | 0.867 | 1.101 |

**Table 2: pH**

| | PRODUCT | | | SOFT | | | HARD | | |
|---|---|---|---|---|---|---|---|---|---|
| Day | Control | Stagnant | Changing | Control | Stagnant | Changing | Control | Stagnant | Changing |
| 0 | 7.3 | | | 8 | | | 7.9 | | |
| 1 | 7.8 | 7.7 | 7.7 | 8.2 | 8.3 | 8.1 | 8.2 | 8.2 | 8.2 |
| 5 | 8.2 | 8 | 7.9 | 8.7 | 8.7 | 8.5 | 8.2 | 8.5 | 8.5 |
| 9 | | | 8 | | | 8.6 | | | 8.4 |
| 12 | 8.2 | 8.2 | 8 | 8.8 | 8.8 | 8.6 | 8.4 | 8.7 | 8.5 |

**Table 3: LSI @ 22 deg. C**

| | PRODUCT | | | SOFT | | | HARD | | |
|---|---|---|---|---|---|---|---|---|---|
| Day | Control | Stagnant | Changing | Control | Stagnant | Changing | Control | Stagnant | Changing |
| 0 | -1.3 | | | -1.7 | | | 0.6 | | |
| 1 | -0.7 | -0.8 | -0.8 | -1.4 | -1.3 | -1.5 | 1 | 0.9 | 0.9 |
| 5 | -0.4 | -0.6 | -0.7 | -0.9 | -1 | -0.8 | 0.8 | 1.2 | 1.2 |
| 9 | | | -0.7 | | | -1.6 | | | 1.1 |
| 12 | -0.4 | -0.4 | -0.6 | -0.9 | -0.9 | -0.5 | 0.4 | 1.4 | 1.2 |

**Table 4: Alkalinity @ 22 deg. C**

| | PRODUCT | | | SOFT | | | HARD | | |
|---|---|---|---|---|---|---|---|---|---|
| Day | Control | Stagnant | Changing | Control | Stagnant | Changing | Control | Stagnant | Changing |
| 0 | 47 | | | 197 | | | 198 | | |
| 1 | 48 | 48 | 48 | 201.3 | 202 | 198 | 196.3 | 198 | 198 |
| 5 | 48 | 48 | 47 | 217 | 212 | 198 | 165 | 208 | 207 |
| 9 | | | 44 | | | 218 | | | 207 |
| 12 | 49 | 48 | 47 | 217 | 216 | 207 | 104 | 220 | 211 |

TDS levels: CDI treated water - about 135 ppm, Soft water - about 480 ppm, Hard water - about 490 ppm.

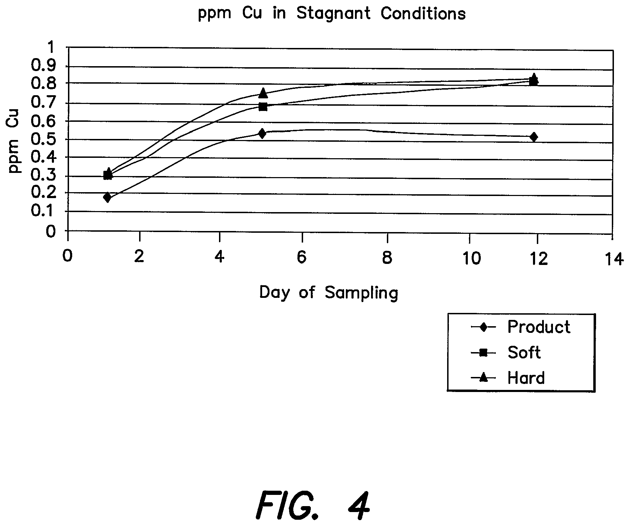

FIG. 4 illustrates graphically the results under stagnant conditions from Trial 2. FIG. 5 illustrates graphically the results under stagnant conditions from Trial 1. Both FIGS. 4 and 5 show that the CEDI treated water is less corrosive than both the feed water and the conventionally softened water.

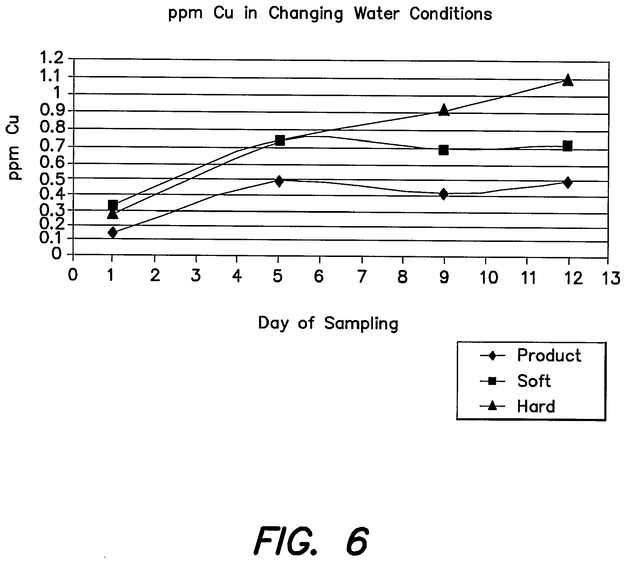

FIG. 6 illustrates graphically the results from Trial 2 when the water samples where intermittently changed. Again, the CEDI product water of the present invention was consistently less corrosive than both the feed water and the conventionally softened water. FIG. 7 illustrates the current used and the conductivity of the water produced in trial 1. FIG. 8 illustrates the current used and the conductivity of the water produced in trial 2 and shows improved water quality over that achieved in trial 1 (FIG. 7).

The results show that the concentration of copper leached in all trials and under all conditions was the lowest in the CEDI treated samples. The CEDI water had lower pH values than both the conventionally softened and the hard water. As expected, the pH, alkalinity and LSI values in the conventionally softened and the CEDI treated water samples increased with stagnation. The LSI and alkalinity values for untreated hard water decreased with stagnation. The concentration of copper leached increased with stagnation except in the CEDI treated water samples where the level of copper leached stabilized out after 5 days, as shown in FIG. 4.

Thus, the water treated using the apparatus of FIG. 3 (product through cathode) resulted in reduced copper leaching despite exhibiting a lower pH, a lower (negative) LSI and a lower alkalinity than either the hard feed water or the conventionally softened water. In addition, the CEDI water of trial 2 was significantly less conductive (purer) than that of trial 1, yet was as non-corrosive as was the higher conductivity water. This means the method and apparatus of trial 2 may be particularly suitable for use in a water supply system presenting copper pipes or other materials where corrosion may be a concern. As defined herein, a water is considered to be less corrosive if it exhibits a lower copper concentration when subjected to one or more of the testing procedures described above. The product water of the present invention therefore may be less corrosive than either the feed water or the conventionally softened water.

Those skilled in the art would readily appreciate that all parameters and configurations described herein are meant to be exemplary and that actual parameters and configurations will depend upon the specific application for which the methods of the present invention are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described.

## Claims

1. A method of treating water comprising:
passing a first water stream (116) through a depleting compartment (140) of an electrodeionization device produce a second water stream (160) from the depleting compartment (140) having an LSI of less than 0;
passing the second water stream (160) through a cathode compartment (120) of the electrodeionization device to produce a third water stream (180), the third water stream (180) being less corrosive than the first water stream (116) and having an LSI of less than 0; and
wherein the corrosivity of the second water stream (160) is reduced by passing the water through the cathode compartment (120),
wherein the third water stream (180) is made less corrosive by reducing the concentration of oxidative species in the water stream;
after exiting the cathode compartment (120) the third water stream (180) is directed to a point of use or a recirculation loop in communication with a storage tank;
passing water (118) first through a concentrating compartment (130) and then through an anode compartment (110) of the electrodeionization device.

2. A method of providing potable water comprising:
providing water to be treated from a storage loop including a storage tank;
passing a first water stream (218) of the water to be treated through a cathode compartment (220) of an electrodeionization device to produce a second water stream (250);
passing the second water stream (250) through a depleting compartment (240) of the electrodeionization device to produce a treated potable water (280) having an LSI of less than 0, the treated potable water (280) being less corrosive than the first water stream (218); and
wherein the corrosivity of the first water stream (218) is reduced by passing the water through the cathode compartment (220);
wherein the treated potable water (280) is made less corrosive by reducing the concentration of oxidative species in the water;
after exiting the depleting compartment (240) directing the treated potable water (280) to a point of use or to the storage loop including the storage tank;
passing water (216) first through an anode compartment (210) of the electrodeionization device and then through a concentrating compartment (230).

## Patentansprüche

1. Ein Verfahren zur Aufbereitung von Wasser, das Folgendes beinhaltet:
Leiten eines ersten Wasserstroms (116) durch eine Abreicherungskammer (140) einer Elektrodeionisationsvorrichtung, um einen zweiten Wasserstrom (160) aus der Abreicherungskammer (140) zu produzieren, der einen LSI von weniger als 0 aufweist;
Leiten des zweiten Wasserstroms (160) durch eine Kathodenkammer (120) der Elektrodeionisationsvorrichtung, um einen dritten Wasserstrom (180) zu produzieren,
wobei der dritte Wasserstrom (180) weniger korrodierend als der erste Wasserstrom (116) ist und einen LSI von weniger als 0 aufweist; und
wobei die Korrosivität des zweiten Wasserstroms (160) durch das Leiten des Wassers durch die Kathodenkammer (120) reduziert wird,
wobei der dritte Wasserstrom (180) durch das Reduzieren der Konzentration oxidativer Spezies in dem Wasserstrom weniger korrodierend gemacht wird;
nach dem Austreten aus der Kathodenkammer (120) der dritte Wasserstrom (180) zu einem Verwendungspunkt oder einer Rückführungsschleife in Kommunikation mit einem Speichertank geführt wird;
Leiten von Wasser (118) zunächst durch eine Anreicherungskammer (130) und dann durch eine Anodenkammer (110) der Elektrodeionisationsvorrichtung.

2. Ein Verfahren zum Bereitstellen von Trinkwasser, das Folgendes beinhaltet:
Bereitstellen von aufzubereitendem Wasser aus einer Speicherschleife, die einen Speichertank umfasst;
Leiten eines ersten Wasserstroms (218) des aufzubereitenden Wassers durch eine Kathodenkammer (220) einer Elektrodeionisationsvorrichtung, um einen zweiten Wasserstrom (250) zu produzieren;
Leiten des zweiten Wasserstroms (250) durch eine Abreicherungskammer (240) der Elektrodeionisationsvorrichtung, um ein aufbereitetes Trinkwasser (280) zu produzieren,
das einen LSI von weniger als 0 aufweist, wobei das aufbereitete Trinkwasser (280) weniger korrodierend als der erste Wasserstrom (218) ist; und
wobei die Korrosivität des ersten Wasserstroms (218) durch das Leiten des Wassers durch die Kathodenkammer (220) reduziert wird;
wobei das aufbereitete Trinkwasser (280) durch das Reduzieren der Konzentration oxidativer Spezies in dem Wasser weniger korrodierend gemacht wird;
nach dem Austreten aus der Abreicherungskammer (240), Führen des aufbereiteten Trinkwassers (280) zu einem Verwendungspunkt oder zu der Speicherschleife, die den Speichertank umfasst;
Leiten von Wasser (216) zunächst durch eine Anodenkammer (210) der Elektrodeionisationsvorrichtung und dann durch eine Anreicherungskammer (230).

## Revendications

1. Un procédé de traitement d'eau comprenant :
le passage d'un premier courant d'eau (116) à travers un compartiment d'appauvrissement (140) d'un dispositif d'électrodésionisation afin de produire un deuxième courant d'eau (160) provenant du compartiment d'appauvrissement (140) ayant un LSI (Langelier Saturation Index, indice de saturation de Langelier) de moins de 0 ;
la passage du deuxième courant d'eau (160) à travers un compartiment de cathode (120) du dispositif d'électrodésionisation afin de produire un troisième courant d'eau (180), le troisième courant d'eau (180) étant moins corrosif que le premier courant d'eau (116) et ayant un LSI de moins de 0 ; et
dans lequel la corrosivité du deuxième courant d'eau (160) est réduite par le passage de l'eau à travers le compartiment de cathode (120),
dans lequel le troisième courant d'eau (180) est rendu moins corrosif par la réduction de la concentration d'espèces oxydantes dans le courant d'eau ;
après la sortie du compartiment de cathode (120), le troisième courant d'eau (180) est dirigé vers un point d'utilisation ou une boucle de recirculation en communication avec un réservoir de stockage ;
le passage d'eau (118) d'abord à travers un compartiment de concentration (130) et
ensuite à travers un compartiment d'anode (110) du dispositif d'électrodésionisation.

2. Un procédé de fourniture d'eau potable comprenant :
la fourniture d'eau devant être traitée provenant d'une boucle de stockage incluant un réservoir de stockage ;
le passage d'un premier courant d'eau (218) de l'eau devant être traitée à travers un compartiment de cathode (220) d'un dispositif d'électrodésionisation afin de produire un deuxième courant d'eau (250) ;
le passage du deuxième courant d'eau (250) à travers un compartiment d'appauvrissement (240) du dispositif d'électrodésionisation afin de produire une eau potable traitée (280) ayant un LSI de moins de 0, l'eau potable traitée (280) étant moins corrosive que le premier courant d'eau (218) ; et
dans lequel la corrosivité du premier courant d'eau (218) est réduite par le passage de l'eau à travers le compartiment de cathode (220) ;
dans lequel l'eau potable traitée (280) est rendue moins corrosive par la réduction de la concentration d'espèces oxydantes dans l'eau ;
après la sortie du compartiment d'appauvrissement (240), la direction de l'eau potable traitée (280) vers un point d'utilisation ou vers la boucle de stockage incluant le réservoir de stockage ;
le passage d'eau (216) d'abord à travers un compartiment d'anode (210) du dispositif d'électrodésionisation et ensuite à travers un compartiment de concentration (230).
